# EUROPEAN PATENT SPECIFICATION

(11) **EP 3 693 223 B1**
(45) Date of publication and mention of the grant of the patent: **15.09.2021**
(21) Application number: 20155956.4
(22) Date of filing: 06.02.2020
(51) Int. Cl.: B60R 7/02, B60R 7/04, B62D 33/06

(54) **CAB WITH STORAGE BOX FOR A HEAVY VEHICLE**
FAHRERKABINE MIT AUFBEWAHRUNGSBOX FÜR EIN SCHWERES FAHRZEUG
CABINE AVEC BOÎTE DE RANGEMENT POUR UN VÉHICULE LOURD

(30) Priority: 06.02.2019 IT 201900001737
(43) Date of publication of application: 12.08.2020
(73) Proprietor: IVECO S.p.A., 10156 Torino (IT)
(72) Inventor: FINOTELLO, Roberto, 10040 LOMBARDORE (TO) (IT)
(74) Representative: Faraldi, Marco

(56) References cited:
- EP-A2- 3 147 160
- DE-A1-102004 025 248
- DE-A1-102009 052 594
- DE-C1- 19 711 035
- US-A1- 2010 052 353

## Description

### TECHNICAL FIELD

The invention relates to a cab for a heavy vehicle.

### KNOWN STATE OF THE ART

As it is known, some heavy vehicles, for example trucks, are provided with a habitable cab, which typically contains, on the inside, one or more storage boxes, commonly called storage lockers, which can be accessed through a door communicating with the outside both from the outside and from the inside of the cab itself so as to allow the user of the vehicle to easily store and pull out frequent-use objects.

For example, DE102004025248A1 discloses a cab for a truck according to the preamble of claim 1, with a closure part usable as storage space, which is adjustable by means of a slide-in container that can be inserted in the cab from the outside thereof.

However, even if they are useful to fulfil the aim mentioned above, storage lockers occupy, inside the cab of said vehicles, a useful space, which limits the habitable space available for users or which could otherwise be used to install other use accessories.

US20100052353A1 and DE102009052594A1 discloses examples of foldable storage lockers.

In view of the above, there is the need to house, in an orderly, simple, and comfortable fashion, objects inside containers, which, at the same time, do not decrease the useful space inside the cab of a vehicle.

The object of the invention is to fulfil the need discussed above, especially in an economic fashion.

### SUMMARY OF THE INVENTION

The aforesaid object is reached by a cab for a heavy vehicle according to the appended claims.

### BRIEF DESCRIPTION OF THE DRAWINGS

The invention will be best understood upon perusal of the following detailed description of a preferred embodiment, which is provided by way of non-limiting example, with reference to the accompanying drawings, wherein:
- figure 1 is a side view, with parts removed for greater clarity, of a cab for a heavy vehicle according to the invention;
- figure 2 is a view from the top of the cab of figure 1;
- figure 3 is a side view, on a larger scale, of a collapsible storage box arranged inside the cabin in an extended configuration;
- figure 4 is similar to figure 3 and shows the storage box in a collapsed configuration; and
- figures 5, 6 and 7 show the storage box from the top while shifting from the extended configuration to the collapsed configuration.

### DETAILED DESCRIPTION OF THE INVENTION

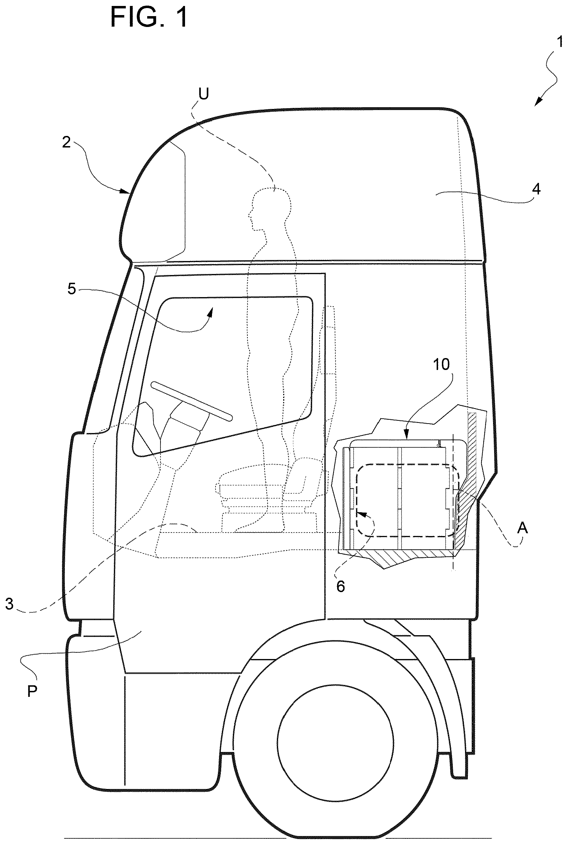

In figure 1, number 1 indicates, as a whole, a heavy vehicle provided with a cab 2 designed to accommodate a driver U and, if necessary, a passenger (who is not shown).

The cab 2 comprises a known outer structure 4, for example provided with a plurality of walls connected to one another, among which there is a floor 3, which is fixed on the inside of the outer structure 4 so as to define, with the latter, a habitable volume 5 for the driver U.

Evidently, the term "habitable" has to be interpreted with its most common and consolidated meaning, namely large enough to allow a medium-build grown-up person to easily walk inside it in a completely straight position. Therefore, for example, the volume defined by a trunk for a motor vehicle or the inner volume of a minivan cannot be considered as "habitable" volumes.

Furthermore, the cab 2 comprises a driver's seat S1, which is oriented in a normal direction of movement of the vehicle 1, and a passenger's seat S2 next to the seat S1.

Beside the seats S1, S2, the outer structure 4 is provided with respective doors P so as to allow the users of the vehicle to get into the cab 1.

Furthermore, the outer structure 4 comprises at least one opening 6, which further establishes a communication between the volume 5 and the outside of the cab 2.

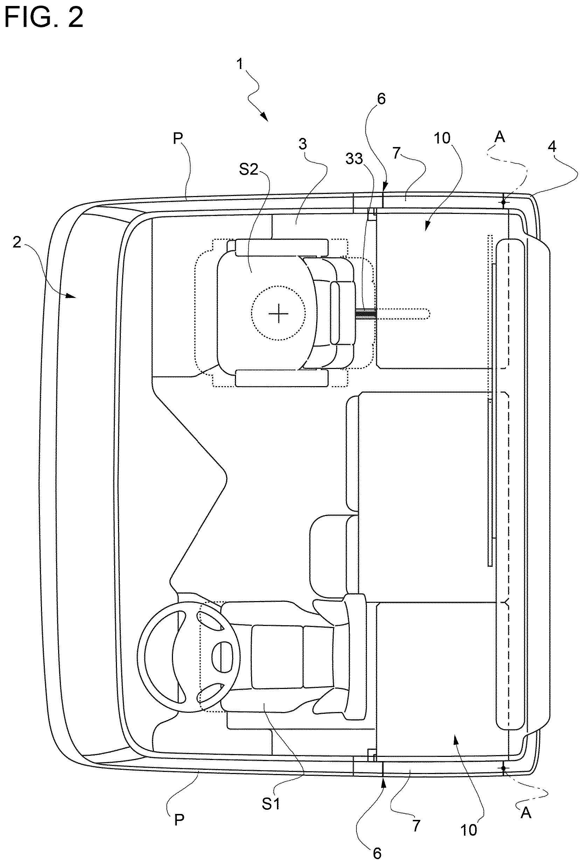

More in detail, according to figure 2, the structure 4 comprises two openings 6, which are respectively located on respective side walls of the structure 4, facing one another and preferably coaxial to one another as well as arranged slightly above the floor 3 behind the doors P, according to the direction of movement of the vehicle 1.

The aim of the openings 6 is that of allowing the users of the vehicle to insert possible objects into the volume 5 from the outside of the cab 2.

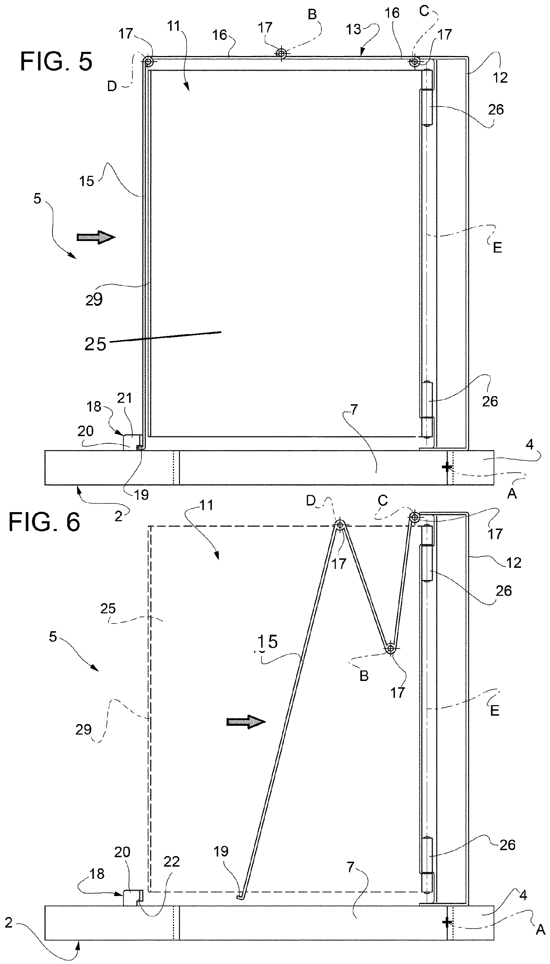

Each opening 6 can be opened and closed according to the needs of the users of the vehicle, since the cab 2 comprises, for each opening 6, a respective panel 7 (figures 5, 6 and 7), which is carried by the structure 4 in a known manner. Each panel 7 is preferably coupled to the structure 4 in a rotary manner so as to rotate around a vertical axis A, namely by means of hinges, which are not shown herein.

At each opening 6, in order to house the introduced objects in an orderly fashion, the can 2 is provided, inside the volume 5, with a relative storage box or locker 10, which is carried by the outer structure 4 and/or by the floor 3.

In this way, the objects housed therein do not create disorder inside the volume 5, nor do they move in an uncontrolled manner when the vehicle 1 is moving.

In the example shown herein, the cab 2 comprises two storage lockers 10, which are respectively arranged behind the seats S1 and S2 and, in particular, are identical to one another, so that the description below will only discuss one of them for the sake of brevity.

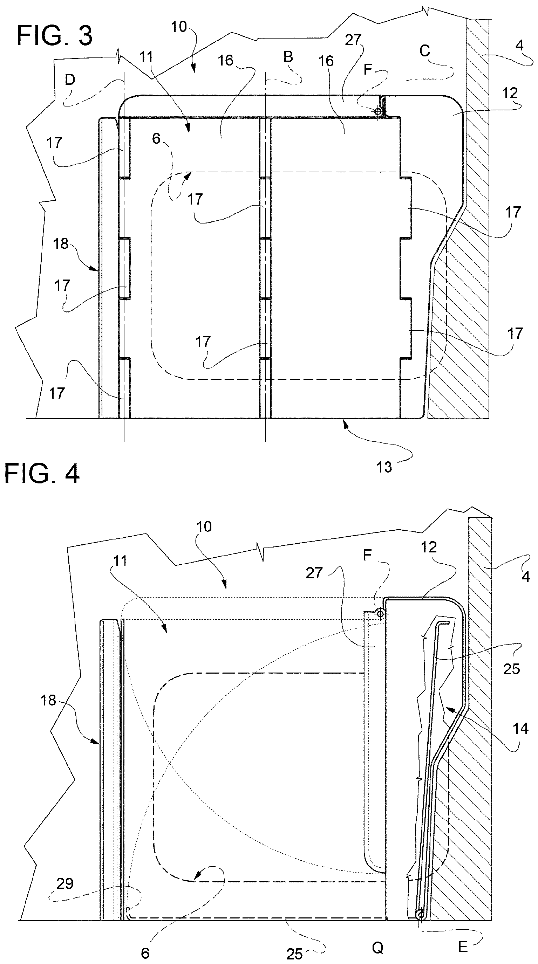

The locker 10 is collapsible or, better said, it can be configured between an extended configuration (figure 3), in which it delimits, on the inside, a space 11 to be used to contain objects, and a collapsed configuration (figure 4), in which it occupied a reduced space compared to the aforesaid space 11.

Therefore, the opening 6 is adjoined to the space 11, namely it directly communicates with the space 11, so as to allow objects to be directly introduced into the locker 10 from the outside of the cab 2.

The space 11 defines a reduced portion of the volume 5; the locker 10, in the extended configuration, is designed to isolate the space 11 from the remaining portion of the volume 5.

Basically, the space occupied by each locker 10 in the collapsed configuration is substantially irrelevant, so that part of the volume 5 behind the seat S1, S2 is free and can be used for other purposes other than storing objects.

More in detail, the locker 10 comprises a wall 12, which is carried by the structure 4 and/or by the floor 3, specifically in a fixed position, and a foldable structural assembly 13, which is coupled to the wall 12 in a movable manner between an unfolded condition and a folded condition, which are respectively associated with the extended configuration and with the collapsed configuration of the locker 10.

In the embodiment shown herein, the wall 12 has a modelled shape such as to define a cavity 14, which is suited to house the assembly 13 in the folded condition.

The assembly 13 comprises a wall 15, which is permanently coupled to the wall 12 in a movable manner between a position of maximum distance from the wall 12, which corresponds to the unfolded condition of the foldable assembly 13, and a position of minimum distance from the wall 12, which corresponds to the folded condition of the foldable assembly 13.

Specifically, the wall 15 is substantially flat and vertical as well as transverse to the sides of the structure 4, when the assembly 13 is in the unfolded condition.

Furthermore, the assembly 13 comprises two further walls 16, which are arranged between the wall 12 and the wall 15, are coupled to one another and, moreover, are respectively coupled to the walls 12, 15.

In particular, the walls 16 are hinged to one another around a vertical hinge axis B and they are respectively hinged to the walls 12, 15 around respective hinge axes C, D, which are parallel to the axis B.

More in particular, the walls 16 are substantially flat and vertical, are coplanar and face the opening 6, when the foldable assembly 13 is in the unfolded condition.

In other words, the couplings between the walls 12, 16, 15 are defined by respective hinges 17, which allow the walls 16 to be folded in a "accordion-like" manner.

As a whole, in the unfolded condition of the assembly 13 (figure 5), the walls 12, 15, 16 and the side of the structure 4 horizontally delimit the space 11, which can directly be accessed after having opened the panel 7.

The space 11 can further be accessed from the top, from the inside of the volume 5, since the locker 10 is provided with a door 27, which is coupled to the wall 12 in a rotary manner so as to rotate around a horizontal axis F, in particular through hinges (figures 3 and 4).

In the extended configuration of the locker 10, the door 27 extends horizontally from the wall 12 until it ends with an end resting against the wall 15, so as to close the space 11 from the top. Hence, in order to introduce objects into the space 11, the driver U can lift the door 27, thus opening the space 11 from the inside of the volume 5 without having to go out of the vehicle, namely from the panel 7.

On the other hand, in the collapsed configuration, the door 27 faces downwards in a position adjacent to the wall 12, so as to partially close the cavity 14. In this case, the door 27, through its weight, prevents the assembly 13 from coming out of the cavity 14 in an uncontrolled manner.

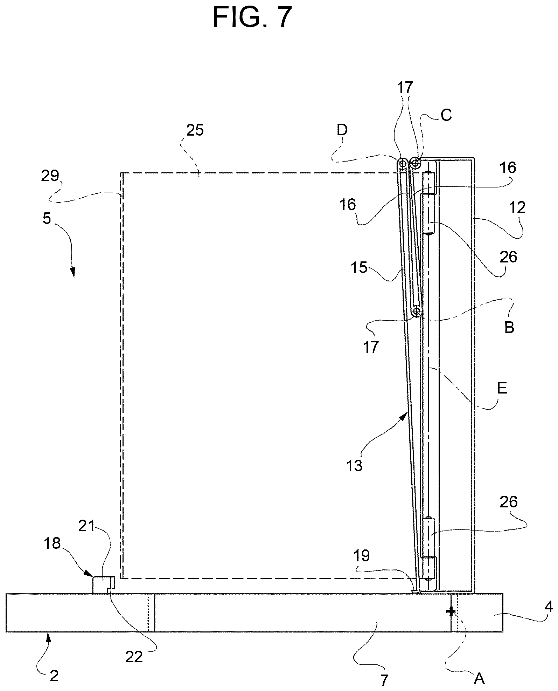

Accordingly, as per figure 7, the walls 16 are folded against one another between the walls 12, 15, namely they are folded in a bellows-like or accordion-like manner, and the wall 15 is approximately parallel to the walls 16.

Conveniently, in order to prevent the locker 10 from accidentally shifting from the extended configuration to the collapsed configuration, the cab 2 comprises an attachment element 18, which is fixed relative to the structure 4, in particular protrudes upwards from the floor 3, whereas the wall 15 ends with an attachment end 19 opposite the walls 16.

More in particular, the attachment element 18 is defined by a vertical bar having an "L"-shaped cross section and comprises a portion 20, which extends from the structure 4 towards the inside of the cabin 2, and a portion 21, which extends in a cantilever manner from the portion 20 parallel to the side and defines, with the portion 20, a recess 22 (figure 6 and 7).

Accordingly, the attachment end 19 also has an "L"-shaped cross section, so as to engage the recess 22 when the assembly 13 is in the unfolded condition.

In this way, the wall 15 and, consequently, the walls 16 are prevented from freely moving along a direction which is perpendicular to the side, until the wall 15 is pushed in a direction contrary to the direction of movement in order to remove the attachment end 19 from the recess 22.

Alternatively or in addition, the assembly 13 comprises a wall 25, which can rotate around a horizontal axis E between a lowered position, which is associated with the unfolded condition of the assembly 13 and in which the wall 25 defines a bottom of the locker 10, and a lifted position, which is associated with the folded condition of the assembly 13 and in which the wall 25 is housed in the cavity 14.

More in detail, the wall 25 is hinged to the wall 12; in the example of figure 4, to this purpose, two hinges 26 are provided.

At the end opposite the hinge 26, the wall 25 carries a protuberance or projection 29, which extends transversely to the wall 25 so as to horizontally face the wall 15 when the locker 10 is in the extended configuration.

In this way, as long as the wall 25 is not lifted, the projection 29 prevents the wall 15 from moving in a direction contrary to the direction of movement of the vehicle 1.

Hence, the projection 29 and the attachment element 18 define retention elements to keep the locker 10 in the extended configuration.

Advantageously, the cab 2 comprises a guide 33, specifically a straight guide, which is flush with the wall 3, so as not to interfere with the wall 25, and is fixed to the floor 3; the seat S2 is coupled to the guide 33 in a sliding manner between an advanced position, in which it is spaced apart from the relative locker 10 in the extended configuration, and a retracted position, in which it occupies part of the space freed by the locker 10 in the collapsed configuration. Therefore, in order to move the seat S2 to the retracted position, the relative locker 10 needs to shift to the collapsed configuration.

The embodiment of the cab 2 described above works as follows.

When one of the users of the vehicle needs in a different manner to use the space occupied by one of the lockers 10, for example the one behind the seat S2, the same user moves behind the seat S2, where the locker 10 is in the extended configuration.

There, the user lifts the door 27 and removes possible objects present in the space 11. Then, the user lifts the wall 25 from the lowered position (figure 4) . At this point, the wall 15 simply needs to be pushed in a direction contrary to the direction of movement of the vehicle 1, so that the attachment end 19 gets out of the recess 22.

Then, if the user keeps pushing the wall 15, the axis B moves towards the inside of the space 11 so as to fold the walls 15 and 16 in a bellows-like or accordion-like manner, until the assembly 13 is in the folded configuration (figures 5, 6 and 7).

Finally, the user releases the door 27, which, because of gravity, reaches a vertical position adjacent to the wall 12, so that the locker 10 is in the collapsed configuration and the seat S2 can be moved to the retracted position.

When the user does not need to use the space left free by the locker 10 any longer, the user can carry out the same operations described above in a reverse order.

Owing to the above, the advantages of a cab according to the invention are evident.

Thanks to the fact that the lockers 10 can be reconfigured, the user of the vehicle has the chance to choose, based on specific circumstances, whether to have the possibility of safely storing objects in an orderly fashion in the space 11 or whether to give up this possibility and use the spaces left free by the collapse the lockers 10 for other purposes, such as, for example, for moving the seat S2 to the retracted position.

This movement of the seat S2 to the retracted position allows users to have a larger habitable space in the area of one of the doors P, so that, furthermore, getting into and out of the volume 5 becomes easier.

Therefore, the habitable space of the cabin 2 is larger compared to known solutions and, furthermore, a greater number of accessories, such as, for example, tables, monitors, fridges, can be accommodated inside the volume 5.

Furthermore, the specific constructive shape of the assembly 13 is sturdy and, at the same time, particularly simple to be folded, as well as extremely compact when it is folded. The attachment element 18 and the projection 29 help increase the sturdiness and the safety of the entire locker 10.

Finally, the cab 2 according to the invention can be subjected to changes and variants, which, though, do not go beyond the scope of protection set forth in the appended claims.

In particular, the constructive shape of the locker 10 could be different than the one described and shown herein; for example, the locker 10 could comprise flexible walls or different rigid portions connected to one another by means of flexible portions, or even telescopic portions.

More in particular, the wall 25 could be absent and the hinges 17 could be replaced by other types of connection, for example virtual hinges.

The lockers 10 could be raised relative to the floor 3 and be supported by the sole structure 4, or they could be supported by the sole floor 3.

Finally, the seat S1 could be moved to a retracted position, like the seat S2.

## Claims

1. A cab (2) for a heavy vehicle (1) comprising:
• a structure (3, 4) which internally defines a habitable volume (5) and comprises an opening (6) for selectively establishing communication of said habitable volume (5) with the outside of the cab (2); and
• a storage box (10) arranged inside said habitable volume (5) in an extended configuration, in which it delimits a first space (11) selectively accessible by means of said opening (6), and carried by said structure (4);
wherein said box (10) is configurable between said extended configuration and a collapsed configuration, in which it occupies a second space reduced with respect to said first space (11);
**characterized in that** said box (10) comprises a first wall (12) carried by said structure (4, 3) in a fixed position and a foldable structural assembly (13) coupled to said first wall (12).

2. The cab according to claim 1, wherein said first wall (12) is fixed with respect to said structure (4, 3) and defines a cavity (14) which houses said foldable structural assembly (13) when said box (10) is in the collapsed configuration.

3. The cab according to claim 2, comprising a door (27) coupled to said first wall (12) in a rotating manner around a first horizontal axis (F), so as to be movable between a horizontal position, in which it closes said first space (11) at the top, and a vertical position, in which it faces downwards and defines, by means of its weight, a containment means for keeping said foldable structural assembly (13) inside said cavity (14) when said box (10) is in the collapsed configuration.

4. The cab according to any one of the foregoing claims, wherein said foldable structural assembly (13) comprises a second wall (15), vertical and permanently coupled in a movable manner to said first wall (12), so as to be closer to said first wall (12) when said box (10) is in the collapsed configuration with respect to when said box (10) is in the extended configuration; said second wall (15) being transverse to said opening (6) in the extended configuration.

5. The cab according to claim 4, comprising releasable retention means (18, 29) configured to keep said box (10) in the extended configuration.

6. The cab according to claim 5, wherein said releasable retention means (18, 29) comprise an attachment element (18) fixed with respect to said structure (4, 3); said second wall (15) having an attachment end (19), which is coupled to said attachment element (18) when said box (10) is in the extended configuration.

7. The cab according to claim 5 or 6, wherein said foldable structural assembly (13) comprises a third wall (25) substantially flat and coupled to said first wall (12) in a rotating manner around a second horizontal axis (E) to be arranged in a horizontal position, in which it defines a bottom for said box (10) in the extended configuration; said retention means (18, 29) comprising a projection (29) transverse with respect to said third wall (25), carried by one end of said third wall (25) opposite said second horizontal axis (E) and facing said second wall (15) when said box (10) is in the extended configuration.

8. The cab according to any one of the claims from 4 to 7, wherein said foldable structural assembly (13) comprises at least a fourth vertical wall (16) permanently coupled to said first and second wall (12, 15); and wherein:
said fourth wall (16) is rotatable with respect to said first wall around at least one vertical axis (B, C, D); and
said fourth wall (16) faces said opening (6) when said box (10) is in the extended configuration.

9. The cab according to any one of the preceding claims, **characterized in that** said first space (11) is horizontally delimited by said structure (4), so as to be directly accessible through said opening (6).

10. The cab according to any one of the preceding claims, comprising a seat (S1, S2) movable with respect to said structure (4, 3) between an advanced and a retracted position according to a direction of movement of said heavy vehicle (1); said box (10) being arranged behind said seat (S1, S2) according to said direction of movement and said seat (S1, S2) occupying, in the retracted position, a first portion of said habitable volume (5) at least partly occupied by said box (10) in the extended configuration.

11. The cab according to any one of the preceding claims, wherein said opening (6) selectively communicates by means of a panel (7) carried in a movable manner by one of said box (10) and said structure (4) to close and open said opening (6) thus allowing said volume (5) to communicate with the outside.

12. A heavy vehicle (1) comprising a cab according to one of the preceding claims.

## Patentansprüche

1. Fahrerkabine für ein Schwerlastfahrzeug (1), umfassend:
- eine Struktur (3,4), welche innen einen Aufenthaltsraum (5) begrenzt und eine Öffnung (6) zur selektiven Herstellung einer Verbindung des Aufenthaltsraums (5) mit dem Außenbereich der Fahrerkabine (2) umfasst; und
- eine Aufbewahrungsbox (10), die innerhalb des Aufenthaltsraums (5) in einer erweiterten Konfiguration angeordnet ist, in welcher sie einen ersten Raum (11) begrenzt, der selektiv durch die Öffnung (6) zugänglich ist, und welche durch die Struktur (4) getragen wird;
wobei die Box (10) zwischen der erweiterten Konfiguration und einer zusammengelegten Konfiguration konfigurierbar ist, in welcher sie einen zweiten Raum einnimmt, der gegenüber dem ersten Raum (11) reduziert ist;
**dadurch gekennzeichnet, dass** die Box (10) eine erste Wand (12) umfasst, die von der Struktur (4,3) in einer festen Position getragen wird, sowie eine faltbare Strukturanordnung (13), die mit der ersten Wand (12) gekoppelt ist.

2. Fahrerkabine gemäß Anspruch 1, bei welcher die erste Wand (12) bezüglich der Struktur (4,3) fest steht und einen Hohlraum (14) begrenzt, welcher die faltbare Strukturanordnung (13) aufnimmt, wenn die Box (10) sich in der zusammengelegten Konfiguration befindet.

3. Fahrerkabine gemäß Anspruch 2, umfassend eine Tür (27), die mit der ersten Wand (12) schwenkbar um eine erste horizontale Achse (F) gekoppelt ist, so dass sie zwischen einer horizontalen Position, in welcher sie den ersten Raum (11) an der Oberseite verschließt, und einer vertikalen Position beweglich ist, in der sie nach unten gewandt ist und aufgrund ihres Gewichts ein Haltemittel bildet, um die faltbare Strukturanordnung (13) in dem Hohlraum (14) zu halten, wenn die Box (10) sich in der zusammengelegten Konfiguration befindet.

4. Fahrerkabine gemäß einem der vorhergehenden Ansprüche, bei welcher die faltbare Strukturanordnung (13) eine zweite Wand (15) umfasst, die vertikal und dauerhaft in beweglicher Weise mit der ersten Wand (12) gekoppelt ist, so dass sie, wenn die Box (10) sich in der zusammengelegten Konfiguration befindet, der ersten Wand (12) näher steht als dann, in welchem die Box (10) sich in der erweiterten Konfiguration befindet; wobei die zweite Wand (15) quer zu der Öffnung (6) in der erweiterten Konfiguration steht.

5. Fahrerkabine gemäß Anspruch 4, umfassend lösbare Haltemittel (18,29), dazu ausgebildet, die Box (10) in der erweiterten Konfiguration zu halten.

6. Fahrerkabine gemäß Anspruch 5, bei welcher die lösbaren Haltemittel (18,29) ein Beschlagelement (18) umfassen, welches bezüglich der Struktur (4,3) befestigt ist; wobei die zweite Wand (15) ein Befestigungsende (19) umfasst, welches mit dem Beschlagelement (18) gekoppelt ist, wenn die Box (10) sich in der erweiterten Konfiguration befindet.

7. Fahrerkabine gemäß Anspruch 5 oder 6, bei welcher die faltbare Strukturanordnung (13) eine dritte Wand (25) umfasst, die im wesentlichen flach und mit der ersten Wand (12) um eine zweite horizontale Achse (E) schwenkbar gekoppelt ist, um in einer horizontalen Position angeordnet zu werden, in welcher sie einen Boden für die Box (10) in der erweiterten Konfiguration bildet; wobei die Haltemittel (18,29) einen Vorsprung (29) umfassen, der quer zur dritten Wand (25) steht und von einem Ende der dritten Wand (25) gegenüber der zweiten horizontalen Achse (E) getragen wird und der zweiten Wand (15) zugewandt ist, wenn die Box (10) sich in der erweiterten Konfiguration befindet.

8. Fahrerkabine gemäß einem der Ansprüche 4 bis 7, bei welcher die faltbare Strukturanordnung (13) zumindest eine vierte vertikale Wand (16) umfasst, die dauerhaft mit der ersten und der zweiten Wand (12, 15) gekoppelt ist; wobei die vierte Wand (16) bezüglich der ersten Wand um zumindest eine vertikale Achse (B, C, D) schwenkbar ist, und die vierte Wand (16) der Öffnung (6) zugewandt ist, wenn die Box (10) sich in der erweiterten Konfiguration befindet.

9. Fahrerkabine gemäß einem der vorhergehenden Ansprüche, **dadurch gekennzeichnet, dass** der erste Raum (11) horizontal durch die Struktur (4) begrenzt wird, derart, dass er unmittelbar durch die Öffnung (6) zugänglich ist.

10. Fahrerkabine gemäß einem der vorhergehenden Ansprüche, umfassend einen Sitz (S1, S2), der bezüglich der Struktur (4, 3) zwischen einer vorgeschobenen und einer zurückgezogenen Position entlang einer Bewegungsrichtung des Schwerlastfahrzeugs (1) beweglich ist; wobei die Box (10) hinter dem Sitz (S1, S2) bezüglich der Bewegungsrichtung angeordnet ist und wobei der Sitz (S1, S2) in der zurückgezogenen Position einen ersten Teil des Aufenthaltsraums (5) einnimmt, der von der Box (10) in der erweiterten Konfiguration zumindest teilweise eingenommen wird.

11. Fahrerkabine gemäß einem der vorhergehenden Ansprüche, bei welcher die Öffnung (6) selektiv mittels eines Paneels (7), welches entweder durch die Box (10) oder die Struktur (4) beweglich getragen wird, zum Öffnen und Schließen der Öffnung (6) kommuniziert, derart, dass das Volumen (5) mit dem Außenbereich in Verbindung stehen kann.

12. Schwerlastfahrzeug (1), umfassend eine Fahrerkabine gemäß einem der vorhergehenden Ansprüche.

## Revendications

1. Cabine (2) pour un véhicule lourd (1) comprenant :
- une structure (3, 4) qui définit en interne un volume habitable (5) et comprend une ouverture (6) pour l'établissement sélectif de communication dudit volume habitable (5) avec le côté extérieur de la cabine (2) ; et
- une boîte de stockage (10) agencée à l'intérieur dudit volume habitable (5) dans une configuration étendue, dans laquelle elle délimite un premier espace (11) accessible sélectivement au moyen de ladite ouverture (6), et portée par ladite structure (4) ;
dans laquelle ladite boîte (10) est configurable entre ladite configuration étendue et une configuration pliée, dans laquelle elle occupe un second espace réduit par rapport audit premier espace (11) ;
**caractérisée en ce que** ladite cabine (10) comprend une première paroi (12) portée par ladite structure (4, 3) dans une position fixée et un ensemble structurel pliable (13) couplé à ladite première paroi (12).

2. Cabine selon la revendication 1, dans laquelle ladite première paroi (12) est fixée par rapport à ladite structure (4, 3) et définit une cavité (14) qui loge ledit ensemble structurel pliable (13) lorsque ladite boîte (10) est dans la configuration pliée.

3. Cabine selon la revendication 2, comprenant une porte (27) couplée à ladite première paroi (12) d'une manière rotative autour d'un premier axe horizontal (F) de sorte à être mobile entre une position horizontale, dans laquelle elle ferme ledit premier espace (11) sur le dessus, et une position verticale, dans laquelle elle est tournée vers le bas et définit, au moyen de son poids, un moyen de confinement pour maintenir ledit ensemble structurel pliable (13) à l'intérieur de ladite cavité (14) lorsque ladite boîte (10) est dans la configuration pliée.

4. Cabine selon l'une des revendications précédentes, dans laquelle ledit ensemble structurel pliable (13) comprend une deuxième paroi (15), couplée verticalement et en permanence d'une manière mobile à ladite première paroi (12) de sorte à être plus près de ladite première paroi (12) lorsque ladite boîte (10) est dans la configuration pliée par rapport au moment où ladite boîte (10) est dans la configuration étendue ; ladite deuxième paroi (15) étant transversale à ladite ouverture (6) dans la configuration étendue.

5. Cabine selon la revendication 4, comprenant des moyens de retenue libérables (18, 29) configurés pour maintenir ladite boîte (10) dans la configuration étendue.

6. Cabine selon la revendication 5, dans laquelle lesdits moyens de retenue libérables (18, 29) comprennent un élément d'attache (18) fixé par rapport à ladite structure (4, 3) ; ladite deuxième paroi (15) présentant une extrémité d'attache (19) qui est couplée audit élément d'attache (18) lorsque ladite boîte (10) est dans la configuration étendue.

7. Cabine selon la revendication 5 ou 6, dans laquelle ledit ensemble structurel pliable (13) comprend une troisième paroi (25) sensiblement plate et couplée à ladite première paroi (12) d'une manière rotative autour d'un second axe horizontal (E) à agencer dans une position horizontale, dans laquelle elle définit un fond pour ladite boîte (10) dans la configuration étendue ; lesdits moyens de retenue (18, 29) comprenant une projection (29) transversale par rapport à ladite troisième paroi (25), portée par une extrémité de ladite troisième paroi (25) opposée audit second axe horizontal (E) et tournée vers ladite seconde paroi (15) lorsque ladite boîte (10) est dans la configuration étendue.

8. Cabine selon l'une des revendications 4 à 7, dans laquelle ledit ensemble structurel pliable (13) comprend au moins une quatrième paroi verticale (16) couplée en permanence auxdites première et deuxième parois (12, 15) ; et dans laquelle :
ladite quatrième paroi (16) peut tourner par rapport à ladite première paroi autour d'au moins un axe vertical (B, C, D) ; et
ladite quatrième paroi (16) fait face à ladite ouverture (6) lorsque ladite boîte (10) est dans la configuration étendue.

9. Cabine selon l'une des revendications précédentes, **caractérisée en ce que** ledit premier espace (11) est délimité horizontalement par ladite structure (4) de sorte à être directement accessible à travers ladite ouverture (6).

10. Cabine selon l'une des revendications précédentes, comprenant un siège (S1, S2) mobile par rapport à ladite structure (4, 3) entre une position avancée et une position rétractée selon une direction de mouvement dudit véhicule lourd (1) ; ladite boîte (10) étant agencée derrière ledit siège (S1, S2) selon ladite direction de mouvement et ledit siège (S1, S2) occupant, dans la position rétractée, une première portion dudit volume habitable (5) occupée au moins partiellement par ladite boîte (10) dans la configuration étendue.

11. Cabine selon l'une des revendications précédentes, dans laquelle ladite ouverture (6) communique sélectivement au moyen d'un panneau (7) porté d'une manière mobile par une de ladite boîte (10) et ladite structure (4) pour fermer et ouvrir ladite ouverture (6) permettant ainsi audit volume (5) de communiquer avec le côté extérieur.

12. Véhicule lourd (1) comprenant une cabine selon l'une des revendications précédentes.
